# EUROPEAN PATENT APPLICATION

(11) **EP 2 889 739 A1**
(43) Date of publication of application: **01.07.2015**
(21) Application number: 13831642.7
(22) Date of filing: 10.07.2013
(51) Int. Cl.: G06F 3/0481, G06F 3/041, G06F 3/048, G06F 3/0488, H04M 1/00

(54) **USER INTERFACE DEVICE, USER INTERFACE METHOD, AND PROGRAM**

(30) Priority: 23.08.2012 JP 2012184109
(71) Applicant: NTT DOCOMO, INC., Chiyoda-ku Tokyo 100-6150 (JP)
(72) Inventor: TAGAYA, Masashi, Tokyo 100-6150 (JP); AOYAGI, Sadanori, Tokyo 100-6150 (JP); MORINAGA, Yasuo, Tokyo 100-6150 (JP); TSUKAMOTO, Masakatsu, Tokyo 100-6150 (JP)
(74) Representative: Hoffmann Eitle
(86) International application number: PCT/JP2013/068885
(87) International publication number: WO 2014/030456

(57) **Abstract**

Display device 10 is able to detect a proximity operation in which finger F is brought close to display surface 141 without making contact and a contact operation in which the finger makes contact with display surface 141. Display device 10 specifies a position of a finger of a user while in a stationary state above display scree 141 as reference position BP1 or BP2 based on the proximate operation of the user. When display device 10 specifies reference position BP1 or BP2 after screen SC1 including selectable objects is displayed on display surface 141, display device 10 enlarges and displays objects located in specific region Ts according to the specified reference position (objects having reference sign "M" at the end). This allows for supporting the user in indicating by a contact operation of an object located at a position further away from the finger when the user operates display device 10 with one hand.

## Description

### Technical Field

The present invention relates to a display control of an object on a user interface.

### Background Art

Some display devices, such as smartphones or tablet terminals, include a user interface that displays a selectable object (for example, an operation item such as an icon image), and allow the use of a function corresponding to a selected object that is selected by a user. Patent Documents 1 and 2 disclose a technique for preventing the occurrence of an operation error when a user selects an object on this kind of user interface. Patent Document 1 discloses that when the approach of a finger to a touch panel is detected, a key disposed near a detected position is enlarged and displayed. Patent Document 2 discloses that a part to be displayed, which is to be enlarged and displayed, is registered in advance, and when the approach of a finger to the registered part is detected, the part is enlarged and displayed. Non-patent Document 1 discloses that when a slide operation is performed at the end of a screen, an operation menu is displayed near the operation position.

### Citation List

### Patent Document

Patent Document 1: JP2006-59238A
Patent Document 2: JP2009-3867A

### Non Patent Document

Non-Patent Document 1: How to use Yahoo! browser application for Android (basic), online, Yahoo Japan Corporation, searched on August, 23, 2012, the Internet (URL: http://note.chiebukuro.yahoo.co.jp/detail/n64634)

### Summary of Invention

### Technical Problem

In the invention disclosed in patent Document 1, a plurality of keys located in a range that is determined based on a position of a finger of a user is enlarged and displayed in the same way. However, not all of the plurality of keys is limited to a key that is likely to be erroneously operated by the user. The invention disclosed in patent Document 2 enlarges and displays a part to be displayed that is registered in advance. Hence, the invention disclosed in patent Document 2 does not always enlarge and display a part to be displayed that is likely to be erroneously operated by a user. Therefore, in these inventions an object may be enlarged and displayed that is not likely to be erroneously operated by a user intrinsically, and that contributes little to an improvement in operability.

Incidentally, when a user operates a display device such as a smartphone with a finger (typically a thumb) while holding the display device in one hand, the user must exert force to extend the finger or change the manner in which a display device is held to select an object that is displayed at a position further away from the finger. This may increase an operational burden on the user. In the technique disclosed in non-patent Document 1, an operation menu is displayed near a position of a finger of a user by the user performing a slide operation. However, if the user does not know the existence of this function, the user cannot display the operation menu. In addition, in the technique disclosed in non-patent Document 1, the slide operation performed by the user may cause an unintended object to be erroneously selected.

In view of the problems in the prior art, it is an object of the present invention to reduce a burden on a user having to perform an operation to select accurately an object that is likely to be erroneously operated by the user unless the user is unduly conscious of performing a specific operation.

### Solution to Problem

To solve the above problem, a user interface device of the present invention includes: a display unit that displays an image on a display surface; an operation detecting unit that detects a first operation in which a pointer is brought close to the display surface without making contact with the display surface, and a second operation in which the pointer is brought closer to the display surface than in the first operation; a reference-position-specifying unit that specifies a reference position of the pointer based on the first operation detected by the operation detecting unit; a display control unit that controls a display of an image including a selectable object on the display surface, and upon a specification of the reference position by the reference-position-specifying unit, controls a display of an object according to the specified reference position in a predetermined display manner for supporting an indication by the second operation; and a selected-object-specifying unit that specifies, upon a detection by the operation detecting unit of a second operation indicating an object displayed on the display surface, the object as a selected object by a user.

In the present invention, the display control unit may control a display of an object located in a specific region further away from the reference position by at least a predetermined distance in the predetermined display manner.

Also, in the present invention, the reference-position-specifying unit may specify, upon a position indicated by the first operation being continually included in a predetermined range for a predetermined period, a reference position located in the predetermined range.

Further, in the present invention, the pointer may be a finger of a user; a determining unit that determines a hand of the user used to hold the user interface device based on the first operation detected by the operation detecting unit, may be included; and the display control unit may control a display of an object located at a position according to the hand determined by the determining unit and a length of the finger of the user, in the predetermined display manner.

Further, in the present invention, a positional-relation-specifying unit that specifies a positional relation between an object according to the reference position and another object displayed on the display surface, may be included; and the display control unit may control a display of the object according to the reference position in the predetermined display manner upon the positional relation specified by the positional-relation-specifying unit satisfying a specific condition.

In this invention, the display control unit may use, as the specific condition, a condition in which the other object is disposed in a predetermined range from a position of the object according to the reference position.

Further, in the present invention, the display control unit may use an enlarged display of the object as the predetermined display manner.

Further, in the present invention, the display control unit may use a change of a display position of the object as the predetermined display manner.

A user interface method of the present invention includes: an operation detecting step of detecting a first operation in which a pointer is brought close to a display surface, on which an image is displayed, without making contact with the display surface, and a second operation in which the pointer is brought closer to the display surface than in the first operation; a reference-position-specifying step of specifying a reference position of the pointer based on the first operation detected in the operation detecting step; a display control step of controlling a display of an image including a selectable object on the display surface, and upon a specification of the reference position in the reference-position-specifying step, controls a display of an object according to the specified reference position in a predetermined display manner for supporting an indication by the second operation; and a selected-object-specifying step of specifying, upon a detection in the operation detecting step of a second operation indicating an object displayed on the display surface, the object as a selected object by a user.

A program of the present invention is a program for causing a computer of a display device that displays an image on a display surface, to execute: an operation detecting step of detecting a first operation in which a pointer is brought close to the display surface without making contact with the display surface, and a second operation in which the pointer is brought closer to the display surface than in the first operation; a reference-position-specifying step of specifying a reference position of the pointer based on the first operation detected in the operation detecting step; a display control step of controlling a display of an image including a selectable object on the display surface, and upon a specification of the reference position in the reference-position-specifying step, controls a display of an object according to the specified reference position in a predetermined display manner for supporting an indication by the second operation; and a selected-object-specifying step of specifying, upon a detection in the operation detecting step of a second operation indicating an object displayed on the display surface, the object as a selected object by a user.

### Effects of Invention

According to the present invention it is possible to reduce a burden on a user having to perform an operation to select accurately an object that is likely to be erroneously operated by the user unless the user is unduly conscious of performing a specific operation.

### Brief Description of the Drawings

Fig. 1 is a block diagram showing a hardware configuration of a display device.
Fig. 2 is a diagram explaining operations that can be specified using a proximity sensor and a contact sensor.
Fig. 3 is a diagram explaining a screen with objects displayed (a first embodiment).
Fig. 4 is a diagram showing an example of a way to hold a display device by a user.
Fig. 5 is a function block diagram showing a functional configuration of a control unit of a display device (the first embodiment).
Fig. 6 is a flowchart showing a procedure for a processing of a display device (the first embodiment).
Fig. 7 is a diagram explaining a procedure for specifying a reference position.
Fig. 8 is a diagram explaining a screen with objects displayed (the first embodiment, after an enlarged display).
Fig. 9 is a diagram explaining a screen with objects displayed (the first embodiment, after a movement).
Fig. 10 is a diagram explaining a screen with objects displayed (the first embodiment, after an enlarged display).
Fig. 11 is a diagram explaining a screen with objects displayed (a second embodiment).
Fig. 12 is a function block diagram showing a functional configuration of a control unit of a display device (the second embodiment).
Fig. 13 is a flowchart showing a procedure for a processing of a display device (the second embodiment).
Fig. 14 is a diagram explaining a screen with objects displayed (the second embodiment, after an enlarged display).
Fig. 15 is a diagram showing a selection of an object by a contact operation.
Fig. 16 is a function block diagram showing a functional configuration of a control unit of a display device (a third embodiment).
Fig. 17 is a diagram explaining a screen with objects displayed (the third embodiment).
Fig. 18 is a diagram explaining a screen with objects displayed (the third embodiment).
Fig. 19 is a diagram explaining a way to automatically determine a hand of a user holding a display device (modifications 3 and 4).
Fig. 20 is a function block diagram showing a functional configuration of a control unit of a display device (modifications 3 and 4).
Fig. 21 is a flowchart showing a procedure for a processing of a display device (modifications 3 and 4).

### Description of Embodiments

Embodiments of the present invention will be described below with reference to the drawings.

### First Embodiment

Below is a description of the first embodiment of the present invention.

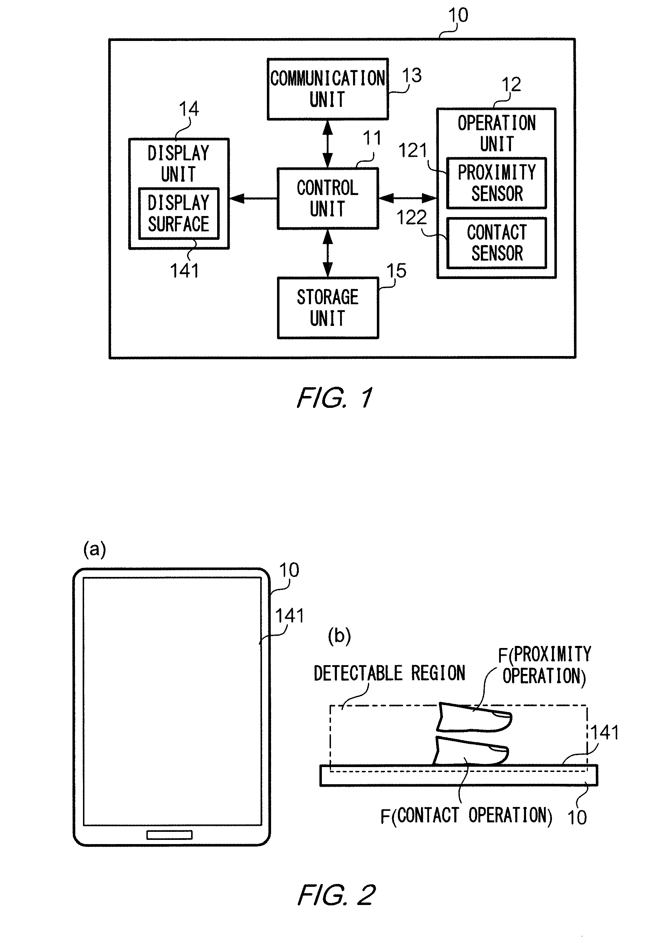

Fig. 1 is a block diagram showing a hardware configuration of display device 10. As shown in Fig. 1, display device 10 includes control unit 11, operation unit 12, communication unit 13, display unit 14, and storage unit 15.

Control unit 11 includes a microcomputer that includes a CPU (Central Processing Unit), a ROM (Read Only Memory), and a RAM (Random Access Memory). The CPU controls various components of display device 10 by loading into the RAM a program stored in the ROM or storage unit 15 and executing the program. Communication unit 13 includes a wireless communication circuit and an antenna. Communication unit 13 is an interface connected to a network to perform communications. Display device 14 includes a rectangle display surface 141, such as a liquid crystal panel, in which a plurality of pixels is arranged. Display device 14 displays an image on display surface 141. Storage unit 15 includes a storage device such as an EEPROM (Electronically Erasable and Programmable ROM) or a flash memory. Storage unit 15 stores a program executed by control unit 11.

Operation unit 12 includes proximity sensor 121 and contact sensor 122. Operation unit 12 is an operation device operated by a user. Proximity sensor 121 is a sensor for detecting a state in which a finger (a fingertip) of a user comes into close proximity of display surface 141 without making contact. Proximity sensor 121 is, for example, an electrostatic capacitance sensor that detects a position of a finger of a user based on the variation of electrostatic capacity. However, for example, an infrared light sensor, a high-frequency oscillation sensor that utilizes electromagnetic induction, or a magnetic sensor that uses a magnet may be used as proximity sensor 121. Any detection method may be employed in this sensor. Contact sensor 122 is a sensor for detecting a state in which a finger of a user makes contact with display surface 141. Contact sensor 122 is, for example, an electrostatic capacitance sensor. However, for example, an ultrasonic sensor that uses ultrasonic waves, a resistive sensor or an infrared light sensor may be used as contact sensor 122. Any detection method may be employed in this sensor.

When detecting a position indicated by the finger of the user, proximity sensor 121 and contact sensor 122 provide control unit 11 with position information representing the detected position. Operations that can be specified using the position information provided by proximity sensor 121 and contact sensor 122 will be described below.

Fig. 2 is a diagram explaining operations that can be specified using position information provided by proximity sensor 121 and contact sensor 122. Fig. 2(a) is a diagram showing a front view of display device 10. Fig. 2(b) is a diagram showing a side view of display device 10.

In the present embodiment, position information representing a position detected by proximity sensor 121 and contact sensor 122 is represented by coordinate information that represents a position in an up-down direction on display surface 141, a position in a right-left direction on display surface 141, and a position in a normal direction of display surface 141, as viewed from the front of display device 10 as shown in Fig. 2(a).

Proximity sensor 121 detects a position of finger F of the user within a detectable region, using a spatial region located in the normal direction of display surface 141, such as a range that is represented by a long dashed, double-short dashed line and is labeled as "detectable region" in Fig. 2(b), as the detectable region. Proximity sensor 121 provides position information representing the detected position. In the following description, an operation specified by position information provided by proximity sensor 121 is referred to as a "proximity operation" (a first operation). Contact sensor 122 detects a position where finger F of the user makes contact with display surface 141, and provides position information representing the detected position. In the following description, an operation specified by position information provided by contact sensor 122 is referred to as a "contact operation" (a second operation). The contact operation corresponds to an operation in which finger F of the user is brought closer to display surface 141 than in the proximity operation.

It is to be noted that a pointer whose position is detected by proximity sensor 121 and contact sensor 122 is not limited to a finger of a user, and the pointer may be a tool, such as a stylus pen that is held by hand and moved by the user to indicate a position on a display surface. Operation unit 12 may include another operation element such as a physical key as an object operated by a user.

Display device 10 that includes the above components provides a user interface called GUI (Graphical User Interface) using the operation unit 12 and display unit 14 described above. In this embodiment, display device 10 is a smartphone, and includes, in addition to the components shown in Fig. 1, components in common with a general smartphone, such as a microphone and a speaker for inputting and outputting sound, and a camera for photography. Display device 10, however, may be a display device other than a smartphone. Display device 10 may be another display device for providing a user interface, such as a tablet computer, a mobile telephone, a portable game console, a portable music player, a personal computer, or a PDA (Personal Digital Assistant).

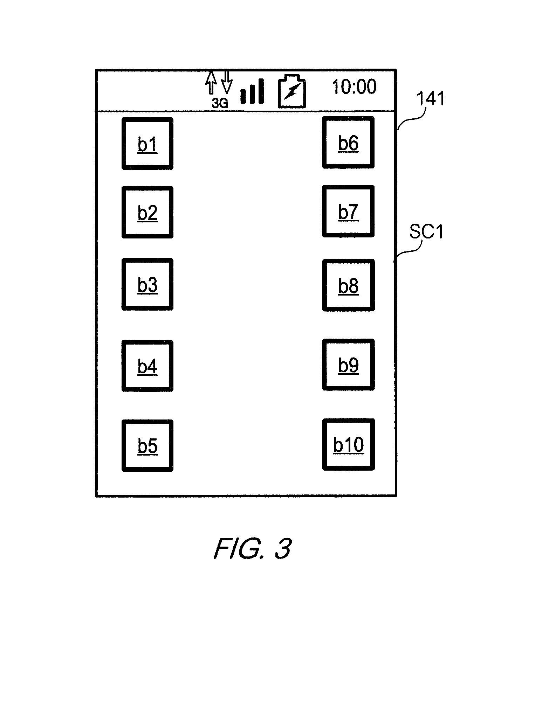

Fig. 3 is a diagram explaining a screen displayed by display device 10. Screen SC1 shown in Fig. 3(a) is a screen including objects b1 to b10 selectable by a user. Each of the objects b1 to b10 is an icon image corresponding to an application program. The objects displayed on display surface 141 can be selected by the indication by a contact operation of the user. When an object is selected by the contact operation of the user, display device 10 specifies the object as a selected object, and executes a specific operation according to the selected object (for example, launches an application program).

It is to be noted that objects of the present embodiment may be not only icon images corresponding to application programs, but also a variety of software buttons or character strings to which hyperlinks are set. In this way, objects of the present embodiment need only to be such objects as those that are selectable by a user and when an object from among the objects is selected by a user, a specific processing according to the selected object is performed by display device 10.

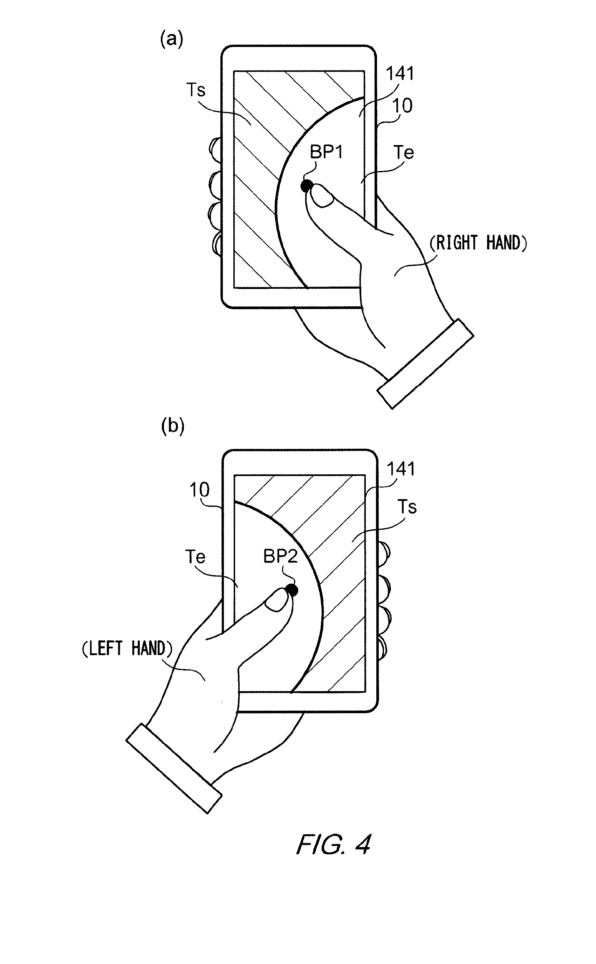

Fig. 4 is a diagram showing an example of a way to hold display device 10 by a user. Fig. 4(a) shows a way to hold display device 10 with a user's right hand. Fig. 4(b) shows a way to hold display device 10 with a user's left hand. In a case of the way shown in Fig. 4(a), the user holds display device 10 in such a way as to wrap a palm of the right hand around display device 10, and performs a contact operation or a proximity operation on display surface 141 by a thumb. In a case of the way shown in Fig. 4(b), the user holds display device 10 in such a way as to wrap a palm of the left hand around display device 10, and performs a contact operation or a proximity operation on display surface 141 by a thumb.

When display device 10 is held by a user in the way shown in Fig. 4(a) or 4(b), display device 10 detects a state in which the thumb stands still while floating above display surface 141, or a state in which the thumb almost stands still (hereinafter these states are correctly referred to as a "stationary state") before the user indicates an object by a contact operation. Display device 10 then specifies a position, on display surface 141, indicated by a user's finger while in a stationary state as a reference position of the finger of the user (PB1 or PB2 shown in Fig. 4). The reference position detected by display device 10 is a position that serves as a reference when the user moves the finger to perform the contact operation, and also is a disposition of the finger of the user before the user indicates an object by the contact operation.

Display device 10 then sets specific region Ts and exclusion region Te based on the specified reference position (BP1 or BP2 shown in Fig. 4), and reflects specified specific region Ts and exclusion region Te on a display control of an object. Although details of the display control will be described later, specific region Ts is a region that is comparatively further away from the finger (thumb) of the user, and is also a region where it is difficult for the user to select an intended object accurately. On the other hand, exclusion region Te is a region that is closer to the finger (thumb) of the user than specific region Ts, and is also a region where it is easier for the user to select an intended object accurately.

A functional configuration related to a user interface of display device 10 will be described next.

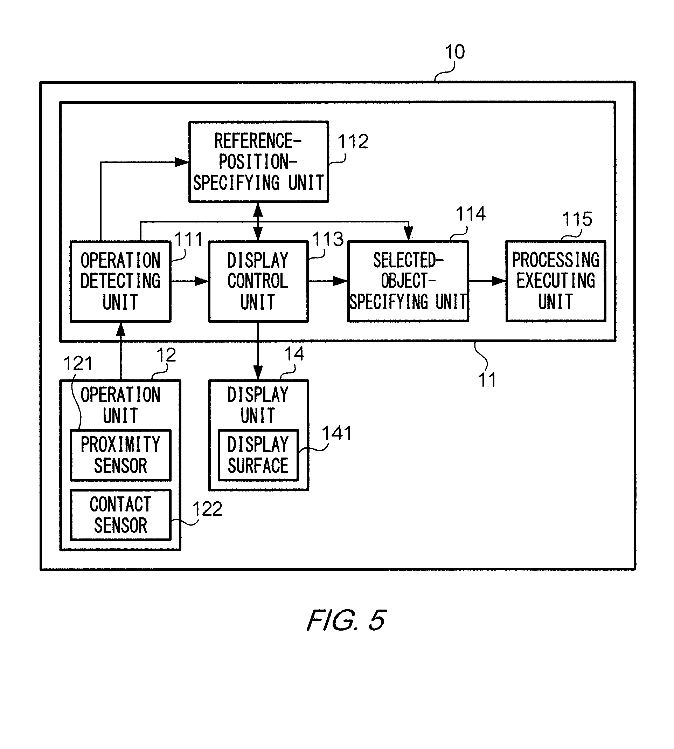

Fig. 5 is a function block diagram showing a functional configuration of control unit 11 of display device 10. As shown in Fig. 5, control unit 11 of display device 10 implements functions corresponding to operation detecting unit 111, reference-position-specifying unit 112, display control unit 113, selected-object-specifying unit 114, and processing executing unit 115.

Operation detecting unit 111 detects a proximity operation and a contact operation that are performed by a user on display surface 141. Operation detecting unit 111 detects the proximity operation of the user based on position information provided by proximity sensor 121. Operation detecting unit 111 detects the contact operation of the user based on position information provided by contact sensor 122.

For example, when position information, in a display area, of an object displayed on display surface 141 matches position information representing a position, in a horizontal direction of display surface 141, of a finger of a user, operation detecting unit 111 detects a proximity operation or a contact operation specified by the position information as an operation indicating the object. Alternatively, even if position information, in a display area, of an object displayed on display surface 141 does not match position information representing a position, in the horizontal direction of display surface 141, of a finger of a user, when these pieces of information match each other in a predetermined range (for example, the finger makes contact with an area near the object), operation detecting unit 111 may detect a proximity operation or a contact operation as an operation indicating the object. In this case, operation detecting unit 111 may extend a range for detecting the proximity operation that indicates the object to a larger region compared with that of the contact operation.

Reference-position-specifying unit 112 specifies a reference position of a finger of a user (for example, reference position BP1 or BP2 of Fig. 4(a) or 4(b)) based on the proximity operation detected by operation detecting unit 111. For example, when a stationary state of a finger of a user is detected above display surface 141, reference-position-specifying unit 112 specifies a position of the finger while in the stationary state as a reference position. In an example, reference-position-specifying unit 112 detects, based on a plurality of sets of position information acquired from proximity sensor 121, a stationary state when positions indicated by proximity operations are continually included in a predetermined range for a predetermined period. Reference-position-specifying unit 112 specifies a reference position in the predetermined range.

Display control unit 113 controls a display of an image including a selectable object on display surface 141. When the reference position is specified by reference-position-specifying unit 112, display control unit 113 controls a display of an object according to the specified reference position in a predetermined display manner for supporting the indication by the contact operation. For example, display control unit 113 enlarges and displays the object, or changes a display position of the object to support the indication by the contact operation of an object that is displayed at a position further away from the reference position (in other words, a position of a finger of a user).

When a contact operation indicating an object displayed on display surface 141 is detected by operation detecting unit 111, selected-object-specifying unit 114 specifies this object as a selected object by a user. Selected-object-specifying unit 114 provides processing executing unit 115 with information representing the selected object.

Processing executing unit 115 executes a processing according to the selected object specified by selected-object-specifying unit 114. For example, processing executing unit 115 executes a specific processing to allow a user to use a function corresponding to the selected object.

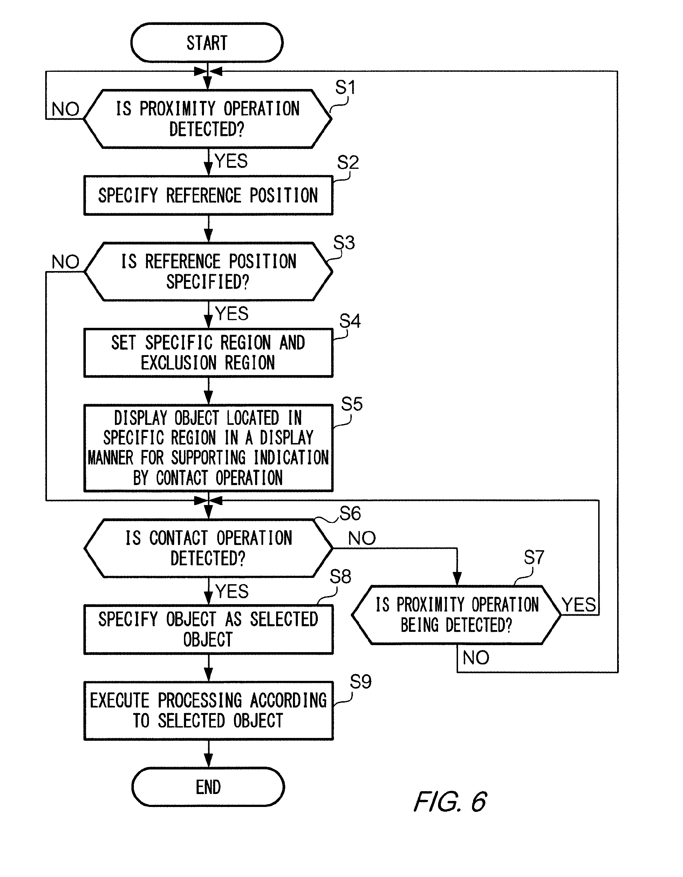

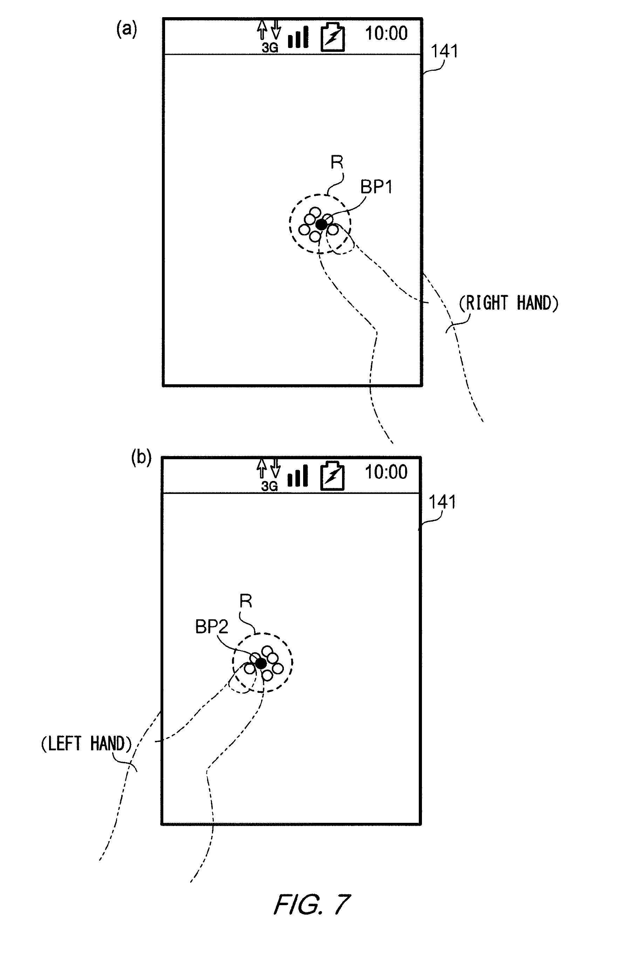

Fig. 6 is a flowchart showing a procedure for a processing performed when display device 10 provides a user interface. Fig. 7 is a diagram explaining a procedure for specifying a reference position.

Display device 10 repeatedly executes the following processing steps while an image including objects is displayed on display surface 141. An operation of display device 10 will be described below with reference to an exemplary operation in a case where display device 10 displays screen SC1 shown in Fig. 3.

Control unit 11 of display device 10 determines whether a proximity operation is detected based on position information provided by proximity sensor 121 (step S1). In this step, control unit 11 waits until position information representing a position within the detectable region is provided by proximity sensor 121 (step S1; No). When the position information within the detectable region is provided by proximity sensor 121, control unit 11 determines that the proximity operation is detected (step S1; YES).

For example, control unit 11 detects a proximity operation performed in the way shown in Fig. 4(a) or 4(b).

Control unit 11 then specifies a reference position of a finger of a user based on the detected proximity operation (step S2). In this case, control unit 11 detects a stationary state of a finger of a user based on a plurality of sets of position information, and specifies a position of the finger at this time as a reference position.

As shown in Fig. 7(a), when display device 10 is held with a user's right hand, control unit 11 detects a stationary state when position information within predetermined circular range R is continuously provided for a predetermined period. Display device 10 specifies reference position BP1 within range R (for example, the center of range R). In this case, control unit 11 specifies that the finger extends from the bottom right of display device 10 in such a way as to determine a hand used to hold display device 10 based on pre-settings made by a user, or to calculate a length or a position of the finger. Similarly, as shown in Fig. 7(b), when display device 10 is held with a user's left hand, control unit 11 detects a stationary state when position information within range R is continuously provided for a predetermined period. Display device 10 specifies reference position BP2 within range R (for example, the center of range R). In this case, control unit 11 specifies that the finger extends from the bottom left of display device 10 in such a manner as to determine a hand used to hold display device 10 based on pre-settings made by a user, or to calculate a length or a position of the finger.

Control unit 11 then determines whether a reference position is specified in the processing of step S2 (step S3). If the reference position is specified, control unit 11 determines "YES" in the processing of step S3, and proceeds to a processing of step S4.

Control unit 11 then sets both specific region Ts and exclusion region Te on display surface 141 based on the reference position specified in the processing of step S2 (step S4). In this case, control unit 11 specifies, as specific region Ts, a region further away from the reference position by at least a predetermined distance. On the other hand, control unit 11 sets a region other than specific region Ts as exclusion region Te. In a case of reference position BP1 shown in Fig. 4(a), since display device 10 is held with a user's right hand, a region extending over an upper-left part of display surface 141 is set as specific region Ts. Specific region Ts is specifically a region that is further away from reference position BP1 by at least a predetermined distance, that includes the entire top and the entire left end of display surface 141, and that includes a part of the bottom and a part of the right end of display surface 141. In a case of reference position BP2 shown in Fig. 4(b), since display device 10 is held with a user's left hand, a region extending over an upper-right part of display surface 141 is set as specific region Ts. Specific region Ts in this case is specifically a region that is further away from reference position BP2 by at least a predetermined distance, that includes the entire top and the entire right end of display surface 141, and that includes a part of the bottom and a part of the left end of display surface 141.

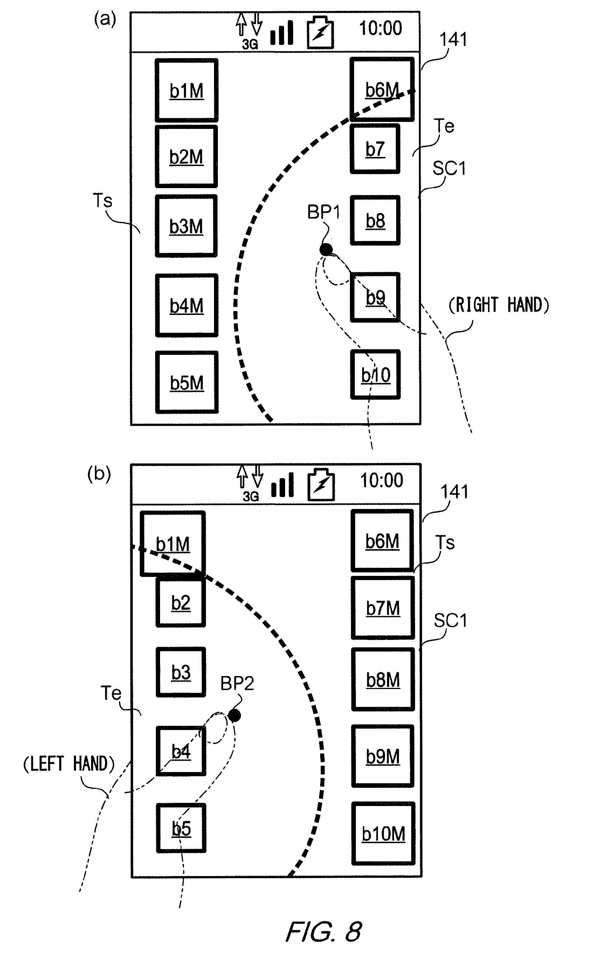

Control unit 11 then causes an object displayed in specific region Ts to display in a predetermined display manner for supporting the indication by a contact operation (step S5). In this case, control unit 11 enlarges and displays an object having a center of gravity included in specific region Ts to support a user in easily selecting the object by a contact operation. In a case of specific region Ts shown in Fig. 4(a), as shown in Fig. 8(a), control unit 11 enlarges objects b1 to b6 in a predetermined scaling factor, and displays enlarged objects b1 to b6 as objects b1M to b6M. On the other hand, control unit 11 does not change a display manner of exclusion region Te, and displays objects b7 to b10 without change. Similarly, in a case of specific region Ts shown in Fig. 4(b), as shown in Fig. 8(b), control unit 11 enlarges objects b1, b6 to b10 in a predetermined scaling factor, and displays enlarged objects b1, b6 to b10 as objects b1M, b6M to b10M. On the other hand, control unit 11 does not change a display manner of exclusion region Te, and displays objects b2 to b5 without change.

In the processing of step S5, control unit 11 may enlarge a plurality of objects to be enlarged and displayed in the same scaling factor, or may enlarge the plurality of objects in different scaling factors for each of the plurality of objects. Control unit 11 may determine a size of the enlarged and displayed object in any manner. For example, control unit 11 may enlarge an object as far as possible without the object overlapping with another object, or may enlarge and display an object to a predetermined size. An object to be enlarged and displayed may be enlarged so as to overlap with only a background part of a screen as shown in Figs. 8(a) and 8(b), or may be enlarged so as to overlap with another object for which no proximity operation is detected. If the object is am image such as an icon image, control unit 11 may enlarge and display this image in the same manner. If the object is a character string, control unit 11 may enlarge a character size or may enlarge a size of a character area including the character string.

In this way, display device 10 is able to support a user in easily operating an object located at a position further away from a position of a finger of the user by enlarging and displaying the object.

Control unit 11 then determines whether a contact operation indicating an object is detected (step S6). If no contact operation indicating an object is detected after the proximity operation is detected, control unit 11 determines "NO" in the processing of step S6. Control unit 11 then determines whether the proximity operation is being detected (step S7). If the proximity operation is being detected (step S7; YES), control unit 11 returns to the processing of step S6 while maintaining the enlarged display of the objects. Meanwhile, if it is determined that the proximity operation is no longer detected (step S7; NO), control unit 11 returns to the processing of step S1. When returning to the processing of step S1, control unit 11 terminates the enlarged display of the objects, and returns to the display of screen SC1 shown in Fig. 3.

In the processing of step S6, if it is determined that the contact operation indicating the object is detected (step S6; YES), control unit 11 specifies the object indicated by the contact operation as a selected object (step S8). Control unit 11 then executes a processing according to the selected object (step S9). In this case, control unit 11 launches an application program according to the object.

However, the processing according to the selected object executed by control unit 11 may be any kind of processing. For example, if an object to which a hyperlink is set using a URL (Uniform Resource Locator) is selected, control unit 11 displays a web page corresponding to the URL on display surface 141. If an object that is used for instructing to transmit input data of a user is selected by the contact operation, control unit 11 transmits the data by communication unit 13.

Hereafter, control unit 11 executes the processing steps shown in Fig. 6 each time a proximity operation is detected, and specifies a specific region and an exclusion region based on the proximity operation, and enlarges and displays an object in the specific region.

It is to be noted that if it is determined that no reference position is specified in the processing of step S3 (step S3; NO), control unit 11 proceeds to the processing of step S6 without changing a display manner for supporting the indication of an object by a contact operation.

Incidentally, a display manner employed in the processing of step S5 for supporting the indication of an object by a contact operation is not limited to the enlarged display of an object. For example, control unit 11 may change a display position of an object located in specific region Ts so as to bring the object close to the reference position.

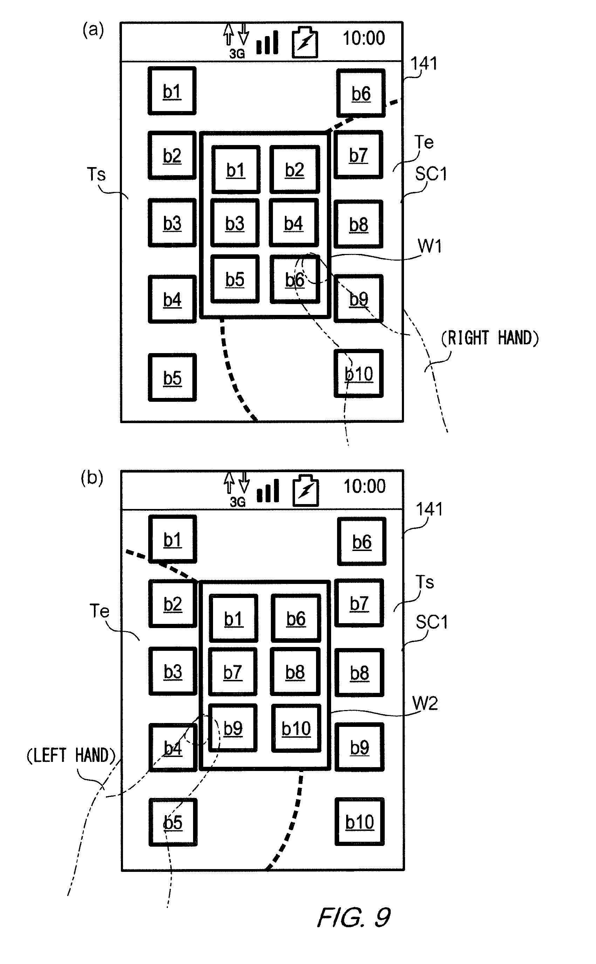

Fig. 9 is an example of a screen in a case where a display position of an object is changed so as to bring the object close to a reference position. Fig. 9(a) shows screen SC1 when specific region Ts shown in Fig. 4(a) is set. Fig. 9(b) shows screen SC1 when specific region Ts shown in Fig. 4(b) is set.

As shown in Fig. 9(a), when display device 10 is held with a user's right hand, control unit 11 displays, on screen SC1, window W1 in which objects b1 to b6 that are located in specific region Ts are disposed. An operation of display device 10 performed when any one of objects b1 to b6 in window W1 is indicated by a contact operation of a user is the same as that performed when any one of objects b1 to b6 on screen SC1 is indicated. Similarly, when display device 10 is held with a user's left hand, control unit 11 displays, on screen SC1, window W2 in which objects b1, b6 to b10 that are located in specific region Ts are disposed. An operation of display device 10 performed when any one of objects b1, b6 to b10 in window W2 is indicated by a contact operation of a user is the same as that performed when any one of objects b1, b6 to b10 on screen SC1 is indicated.

In another example, control unit 11 may simultaneously perform the enlarged display of an object and the change of a position of an object. Control unit 11 may change a display position of an object so as to bring the object close to a reference position without using a window. For example, control unit 11 changes a display position of an object so as to bring the object close to a reference position in such a way as to display an object that is located in specific region Ts in exclusion region Te. Alternatively, control unit 11 may bring a display area of an object close to a reference position by transforming the object. In this way, in the processing of step S5, control unit 11 may display an object in a display manner that can support in reducing an operation burden on the user when the user indicates an object located in specific region Ts by a contact operation.

Even if a user holds display device 10 with the same hand, a reference position varies depending on a way of holding display device 10 such as a holding position. Thus, display device 10 may vary specific region Ts and exclusion region Te depending on the specified reference position.

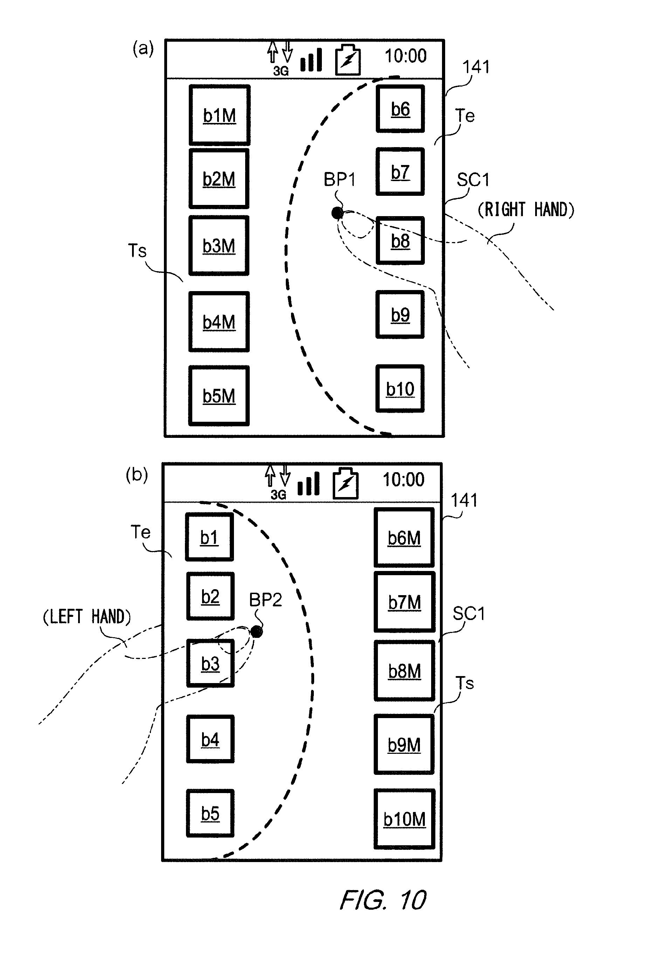

Fig. 10 is a diagram showing an example of a way to hold display device 10. Fig. 10(a) shows a way to hold display device 10 with a user's right hand. On the other hand, Fig. 10(b) shows a way to hold display device 10 with a user's left hand. In Figs. 10(a) and 10(b), display device 10 is held at an upper position compared to that in the case of Fig. 4, and a reference position differs from that in the case of Fig. 4 accordingly.

When reference position BP1 is specified as shown in Fig. 10(a), control unit 11 sets specific region Ts such that a width in the right and left direction at the top of display surface 141 becomes shorter, and that a width in the right and left direction at the bottom of display surface 141 becomes longer, than those in a case shown in Fig. 4(a). This is because it is easy for a user to select an object located in the vicinity of the top of display surface 141 when the user holds display device 10 at around the middle of display device 10. Accordingly, in this case control unit 11 displays objects b1M to b5M that is enlarged objects b1 to b5, but does not enlarge objects b6 to b10. When a reference position is specified as shown in Fig. 10(b), control unit 11 sets specific region Ts such that a width in the right and left direction at the top of display surface 141 becomes shorter and that a width in the right and left direction at the bottom of display surface 141 becomes longer, than that in a case shown in Fig. 4(b). This is because it is easy for a user to select an object located in the vicinity of the top of display surface 141 when the user holds display device 10 at around the middle of display device 10. Accordingly, in this case control unit 11 displays objects b6M to b10M that is enlarged objects b6 to b10, but does not enlarge objects b1 to b5.

In this way, display device 10 may variously vary a reference position, in other words, specific region Ts that is set based on a way to hold display device 10.

As described in the above first embodiment, when display device 10 detects a proximity operation and also detects a stationary state of a finger of a user, display device 10 specifies a position of the finger of the user at this time as a reference position. Display device 10 then displays, on display surface 141, an object according to the specified reference position in a display manner for supporting the indication by a contact operation. This allows display device 10 to determine an object that is likely to lead to an operation error of a user, from among displayed objects, and to perform an operation to reduce a burden on a user having to perform an operation to select accurately an object that is likely to be erroneously operated by the user. In addition, since display device 10 specifies a reference position by detecting a proximity operation, a case is prevented in which an intended object is erroneously selected by a user when the reference position is specified. Further, for example, since display device 10 specifies a reference position by detecting a stationary state, a user does not have to consciously perform a specific operation to specify the reference position.

Furthermore, according to display device 10, it is possible to prevent from being changed a display content of an object that is not likely to be erroneously operated by a user intrinsically, and that contributes to improvement in operability.

### Second Embodiment

The second embodiment of the present invention will be described next.

Although in the above first embodiment, display device 10 determines whether to change a display area based on whether an object is included in a specific region, in the second embodiment display device 10 determines the necessity of the enlarged display taking into account further a positional relation between objects.

Since a hardware configuration of display device 10 of this embodiment is the same as that of the above first embodiment, a description is omitted herein. In the following description, the same hardware configuration and functional configuration as those of the above first embodiment are represented using the same reference signs, and a description is omitted.

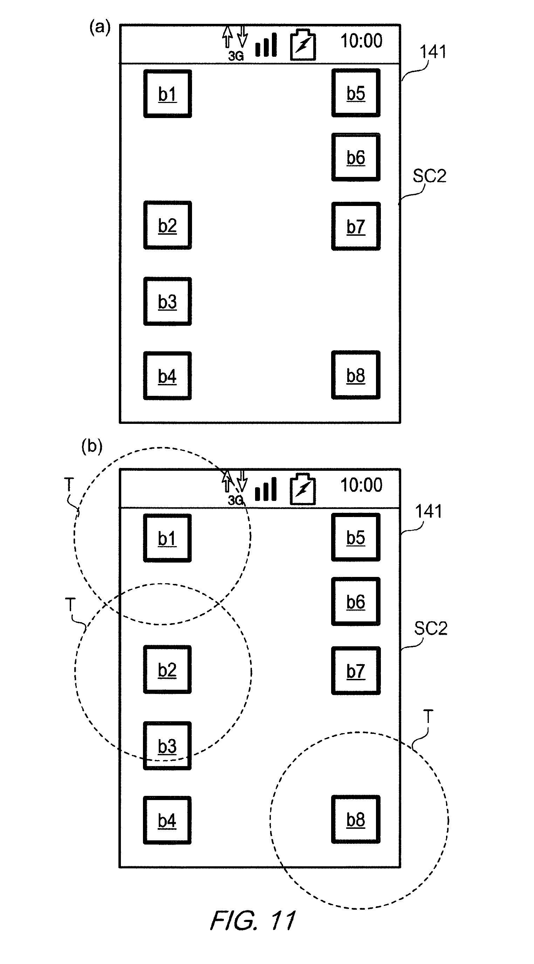

Fig. 11 is a diagram explaining a screen displayed by display device 10.

Screen SC2 shown in Fig. 11(a) is a screen including objects b1 to b8 selectable by a user. In this case, objects b2 to b7 are disposed near another object, while objects b1 and b8 are not disposed near another object.

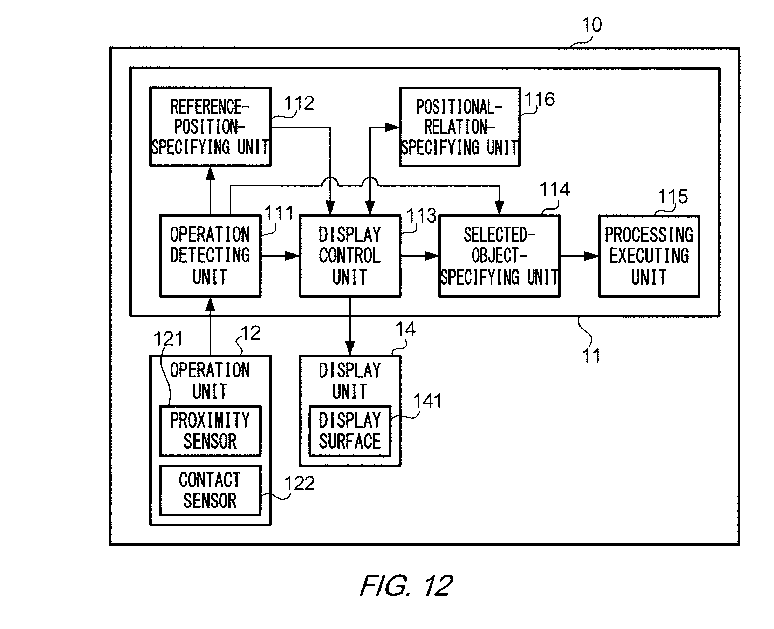

Fig. 12 is a function block diagram showing a functional configuration of control unit 11 of display device 10. As shown in Fig. 12, control unit 11 of display device 10 implements functions corresponding to operation detecting unit 111, reference-position-specifying unit 112, display control unit 113, selected-object-specifying unit 114, processing executing unit 115, and positional-relation-specifying unit 116. Of these functions, operation detecting unit 111, reference-position-specifying unit 112, selected-object-specifying unit 114, and processing executing unit 115 implement the same functions as those of the above first embodiment, and therefore, a description is omitted herein.

Positional-relation-specifying unit 116 specifies a positional relation between an object according to a reference position and another object displayed on display surface 141. For example, positional-relation-specifying unit 116 specifies a position relation indicating whether any other object exists in a predetermined range from a position of an object according to a reference position.

Display control unit 113 controls a display of an object that a corresponding positional relation specified by positional-relation-specifying unit 116 satisfies a specific condition, in a predetermined display manner for supporting the indication by a contact operation. In this case, when any other object is located in a predetermined range (reference range T described later) on the basis of a position of an object according to a reference position, display control unit 113 displays the object in a display manner for supporting the indication of the object by a contact operation.

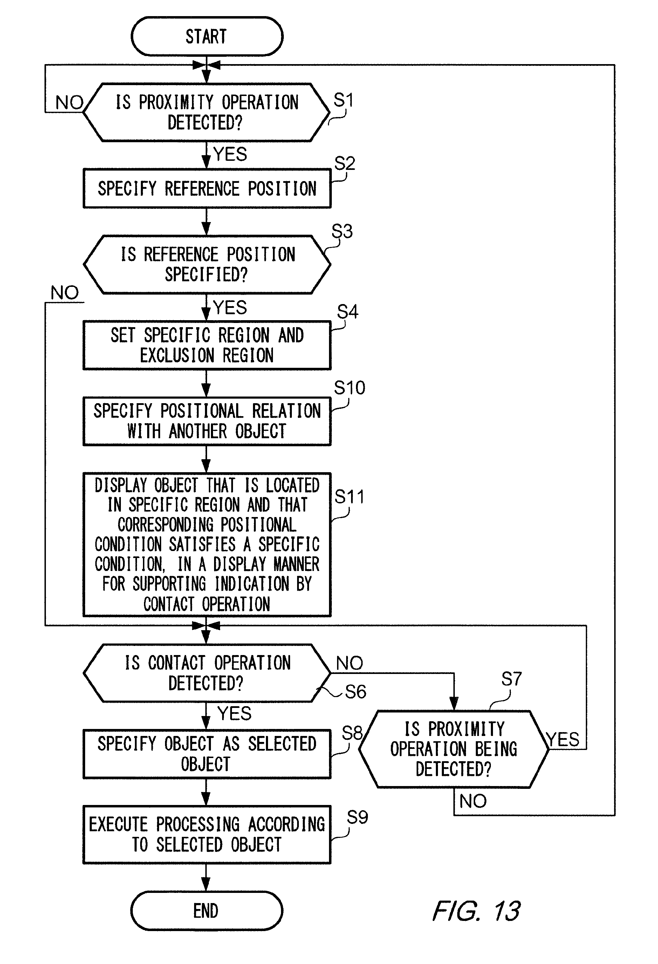

Fig. 13 is a flowchart showing a procedure for a processing performed when display device 10 provides a user interface. Regarding each of the processing steps of the present embodiment, a processing step, for which the same reference sign is used as that in the above first embodiment, is a step in which the same processing is performed as that in the first embodiment, and therefore, a description is omitted herein. Display device 10 repeatedly executes the following processing steps while an image including objects selectable by a user is displayed on display surface 141.

If it is determined that a proximity operation is detected in the processing of step S1 (step S1; YES), and a reference position is specified (step S2, step S3; YES), control unit 11 of display device 10 sets both specific region Ts and exclusion region Te (step S4).

Control unit 11 then specifies a positional relation between an object displayed in a specific region and another object (step S10). A case where control unit 11 displays screen SC2 is shown in Fig. 11 (a). In this case, as shown in Fig. 11(b), control unit 11 firstly determines circular reference range T on the basis of a position of an object (for example, a center of gravity of the object). Control unit 11 then determines whether any other object is included in reference range T. In this case, control unit 11 uses, as a specific condition, a condition in which any other object (for example, a center of gravity of any other object) is included in reference range T in the positional relation specified in the processing of step S10.

Reference range T has a range determined at a design stage or the like to determine whether any other object is disposed near an object located in a specific region. According to the processing of step S10, control unit 11 can specify a positional relation that provides indication of a proximity level between an object indicated by a proximity operation and another object.

When the positional relation between the object displayed in the specific region and another object satisfies the specific condition, control unit 11 displays the object located in the specific region in a predetermined display manner for supporting the indication by a contact operation (step S11).

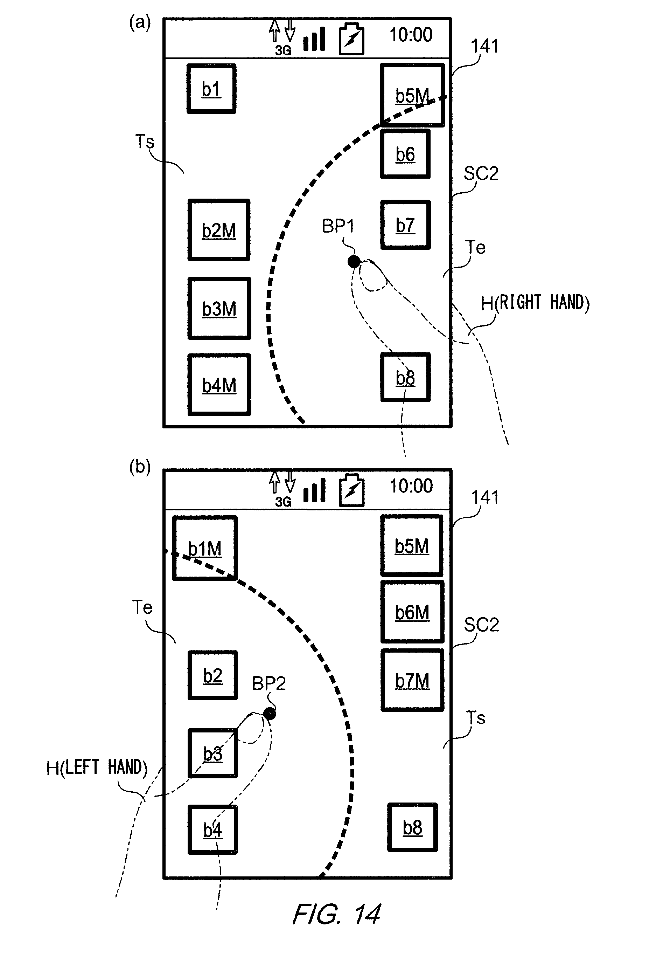

Fig. 14 shows an exemplary screen of screen SC2 after a display manner is changed. Fig. 14(a) shows screen SC2 when specific region Ts shown in Fig. 4(a) is specified. Fig. 14(b) shows screen SC2 when specific region Ts shown in Fig. 4(b) is specified. In this case, control unit 11 enlarges and displays objects to support the indication by a contact operation.

As shown in Fig. 14(a), object b1 is included in specific region Ts; however, no other object is disposed in corresponding reference range T. In a case of an object with no other object being disposed in corresponding reference range T like object b1, since no other object exists in the vicinity of the object, it appears that the object is not likely to be erroneously operated by a user although it may be difficult for the user to operate the object. Therefore, control unit 11 does not enlarge and display object b1 on screen SC2 shown in Fig. 14(a). On the other hand, in a case where another object is disposed in the vicinity of an object, a user may make a contact with another object in the vicinity of an intended object when the user is going to make a contact with the intended object with a user's finger. Therefore, display device 10 enlarges and displays an object with any other object being included in corresponding reference range T. Similarly, as shown in Fig. 14(b), object b8 is included in specific region Ts; however, no other object is disposed in corresponding reference range T. Therefore, control unit 11 does not enlarge and display object b10 in a case shown in Fig. 4(b).

It is to be noted that in also this embodiment control unit 11 may move a display position of an object without enlarging and displaying the object. Control unit 11 may employ the same display manner as that of the first embodiment. In this embodiment, reference range T is circular shaped, but may be formed of another shape such as a square shape, rectangle shape, or an elliptical shape. The circular range does not have to be formed around a position of an object indicated by a proximity operation. Reference range T is not limited to a range equally extending in all directions from a position of an object, but may be a range extending only in some directions.

Hereafter, display device 10 executes the processing steps on and after step S6 in the same procedure as that of the above first embodiment.

According to display device 10 of the second embodiment described above, in addition to achieving the same effect as that of the above first embodiment, it is possible to understand a possibility of the occurrence of an operation error with reference to a positional relation between objects, and to determine the necessity of a support of the indication of an object by a contact operation. This allows display device 10 to prevent from changing the display of an object that is not likely to be erroneously operated although it is difficult for a user to operate the object; as a result it is possible to reduce the change of a display content compared with the configuration of the above first embodiment.

### Third Embodiment

The third embodiment of the present invention will be described next.

Display device 10 of the third embodiment includes in addition to the configuration described in the above second embodiment, a configuration for varying a reference range depending on a method of a contact operation of a user.

Since a hardware configuration of display device 10 of this embodiment is the same as that of the above second embodiment, a description is omitted herein. In the following description, the same hardware configuration, functional configuration, and processing steps as those of the second embodiment are represented using the same reference signs, and a description is omitted.

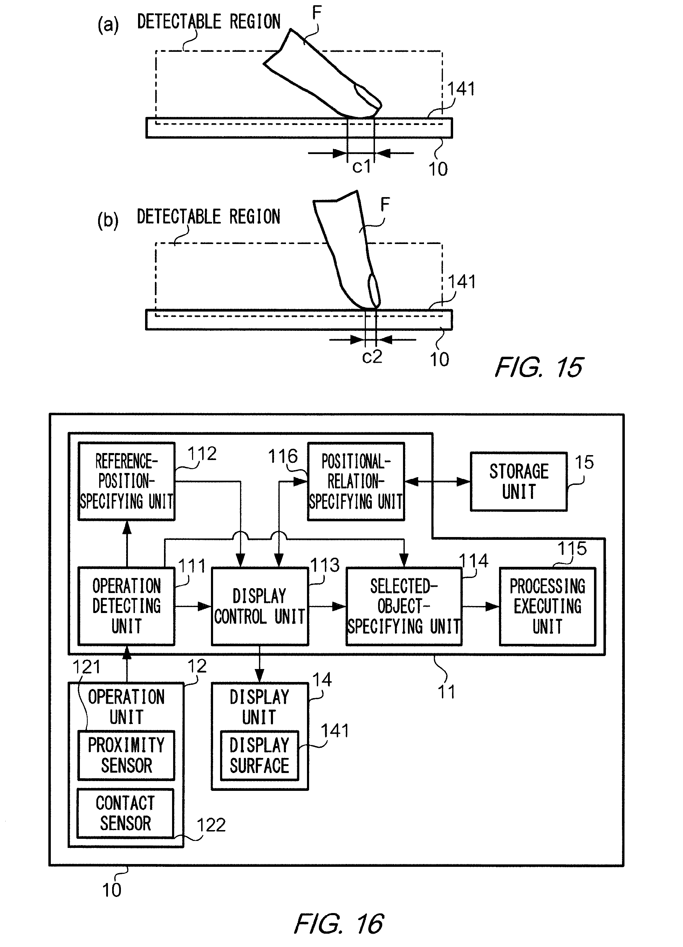

Fig. 15 is a diagram showing contact operations performed by a user for selecting an object as viewed from a side of display device 10.

For example, as shown in Fig. 15(a), a user may perform a contact operation by placing finger F at a certain angle from display surface 141 such that finger F and display surface 141 form a relatively low angle. In this contact operation, a contact region between finger F and display surface 141 has a relatively larger size (hereinafter, referred to as a "contact size," and in this case the size is a contact area). The contact size in this case is c1. On the other hand, as shown in Fig. 15(b), a user may perform a contact operation by placing finger F at an angle from display surface 141 such that finger F and display surface 141 form a relatively high angle. In this contact operation, a contact region between finger F and display surface 141 has a size that is smaller than that in a case shown in Fig. 15(a). The contact size in this case is c2 (< c1).

As is obvious from the comparison between the contact operations shown in Figs, 15(a) and 15(b), it appears that when a user performs a contact operation by placing finger F at a low angle, an operation error of the user is likely to occur for the reason that a contact size in such an operation tends to increase, and this leads to finger F making contact with an object unintended by a user. Conversely, it appears that when a contact operation with a relatively small contact size is performed as shown in Fig. 15(a), an operation error of the user is not likely to occur. Since a contact operation depends on how a user holds display device 10 or a customary manner in which a user performs the operation, it is possible to expect that an identical user would always perform a contact operation in the same way.

Hence, display device 10 regularly stores a contact size between finger F and display surface 141, and sets an appropriate reference range based on a method of a contact operation by decreasing the reference range as the stored contact size decreases (or increasing the reference range as the stored contact size increases).

Fig. 16 is a function block diagram showing a functional configuration of control unit 11 of display device 10. As shown in Fig. 16, control unit 11 of display device 10 implements functions corresponding to operation detecting unit 111, reference-position-specifying unit 112, display control unit 113, selected-object-specifying unit 114, processing executing unit 115, and positional-relation-specifying unit 116. Of these functions, operation detecting unit 111, display control unit 113, selected-object-specifying unit 114, and processing executing unit 115 implement the same functions as those of the above first embodiment, and therefore, a description is omitted herein.

When a contact operation is detected by operation detecting unit 111, positional-relation-specifying unit 116 stores, in storage unit 15, a contact size between finger F and display surface 141, on the contact operation. Positional-relation-specifying unit 116 may specify and store a contact size based only on a contact operation indicating an object, or may store a contact size based on a contact operation that includes a contact operation not indicating an object.

Positional-relation-specifying unit 116 also sets a reference range based on the contact size stored by positional-relation-specifying unit 116 when specifying a positional relation between an object according to a reference position and another object displayed on display surface 141. Positional-relation-specifying unit 116 implements the same function as that of the above second embodiment, except for varying the reference range.

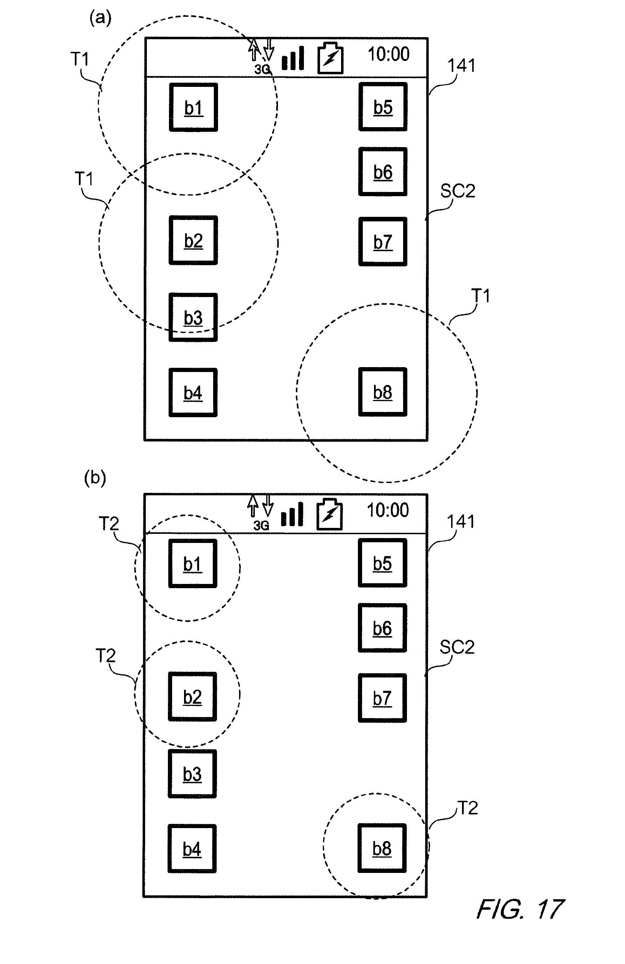

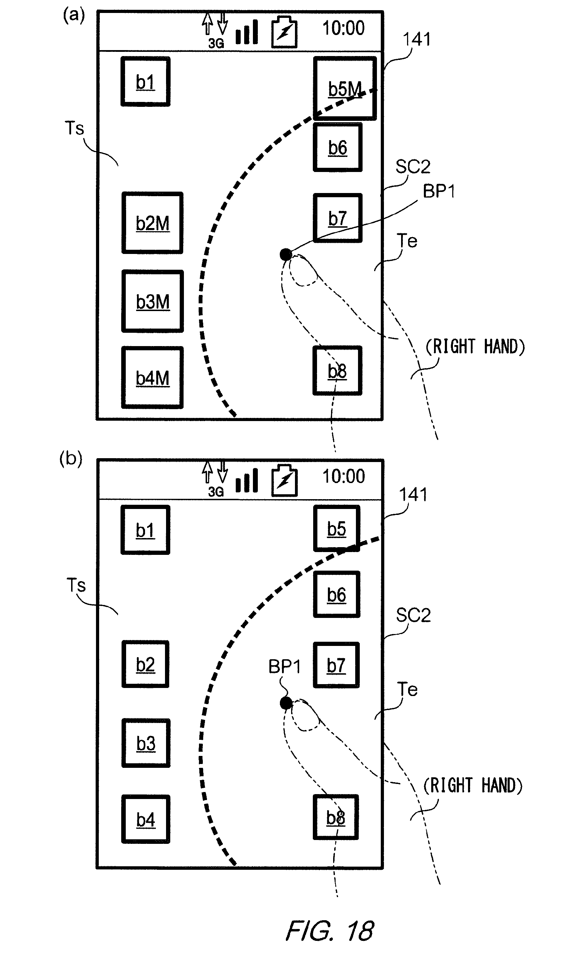

Display device 10 of this embodiment essentially executes the same operation as that of the above second embodiment, according to the process shown in Fig. 13. However, in the processing of step S10, display device 10 sets a reference range according to the contact size stored in storage unit 15, and specifies a positional relation between an object indicated by a proximity operation and another object. Taking screen SC2 shown in Fig. 11(a) as an example, if a contact operation with a large contact size is usually performed as shown in Fig. 17(a), display device 10 uses reference range T1 having a large radius as shown in Fig. 17(a), and determines whether any other object is disposed in reference range T1. In this case, since another object is disposed in each of reference ranges T1 corresponding to objects b2 to b7, display device 10 enlarges and displays the objects as shown in Fig. 18(a), similarly to the above second embodiment. Display device 10 may use a reference range that increases as the contact size increases based on a statistical result of the contact size such as an average value, a median, or a maximum value of the contact size stored in storage unit 15.

On the other hand, if the contact operation with a small contact size is usually performed as shown in Fig. 17(b), display device 10 uses reference range T2 (< T1) having a radius smaller than that in the case shown in Fig. 17(a) as shown in Fig. 17(b), and determines whether any other object is disposed in reference range T2. In this case, since no other object is disposed in reference ranges T2, display device 10 does not enlarge and display any object. In this case, it appears that the user performs a contact operation with a small contact size. Therefore, it is expected that an operation error of a user is not likely to occur even if the size of objects is smaller than or equal to the threshold, or even if other objects are densely disposed surrounding an object as shown in Fig. 18(b).

It is to be noted that in also this embodiment control unit 11 may move a display position of an object without enlarging and displaying the object. Control unit 11 may employ the same display manner as that of the first embodiment. In addition, display device 10 may divide the contact size into more levels, and may set different reference ranges depending on the contact size by storing a correspondence between the contact size and the reference ranges. Further, if display device 10 is capable of detecting a degree of the inclination of the finger with respect to display surface 141 during the contact operation, display device 10 may store the degree of the inclination of the finger, instead of storing the contact size in storage unit 15, and may reflect the degree to the reference range.

### Modification

The present invention may be carried out in different modes from those of the above embodiments. For example, the present invention may be carried out in modes described below. The following modifications may be combined as needed.

### Modification 1

In each of the above embodiment, display device 10 sets a specific region based on a reference position, and change a display manner of an object located in the set specific region. Instead of this operation, display device 10 may specify an object according to the reference position directly without setting a specific region.

### Modification 2

In each of the above embodiments, display device 10 detects a finger of a user while in a stationary state, and specifies a position of the finger at this time as a reference position. However, display device 10 may employ any algorithm for detecting the stationary state, and may specify the reference position in a different manner from that of the embodiments.

Alternatively, when a proximity operation is detected, display device 10 may directly specify a position indicated by the proximity operation as a reference position without detecting a stationary state. For example, when a proximity operation is detected after no object is continuously indicated by a contact operation for a predetermined period, display device 10 directly specify a position indicated by the proximity operation as a reference position. In another manner, display device 10 may specify a reference position based on a number of times, a time, or a frequency of the indication by a proximity operation in a predetermined period. For example, display device 10 specifies, as a reference position, a position that is indicated by a proximity operation the maximum number of times, for the longest time, or most frequently in a predetermined period. Alternatively, display device 10 may specify a reference position based on a distribution of positions detected in a predetermined period such as specifying, as a reference position, the center of positions for which proximity operations are detected in a predetermined period.

In this way, display device 10 needs only to specify, as a reference position, a position of a finger of a user at a time before the user performs a contact operation, based on a proximity operation detected by proximity sensor 121. Display device 10 can employ a variety of algorithms for specifying a reference position based on a proximity operation.

### Modification 3

In each of the above embodiments, display device 10 may automatically determine a hand used to hold display device 10 by detecting a proximity operation.

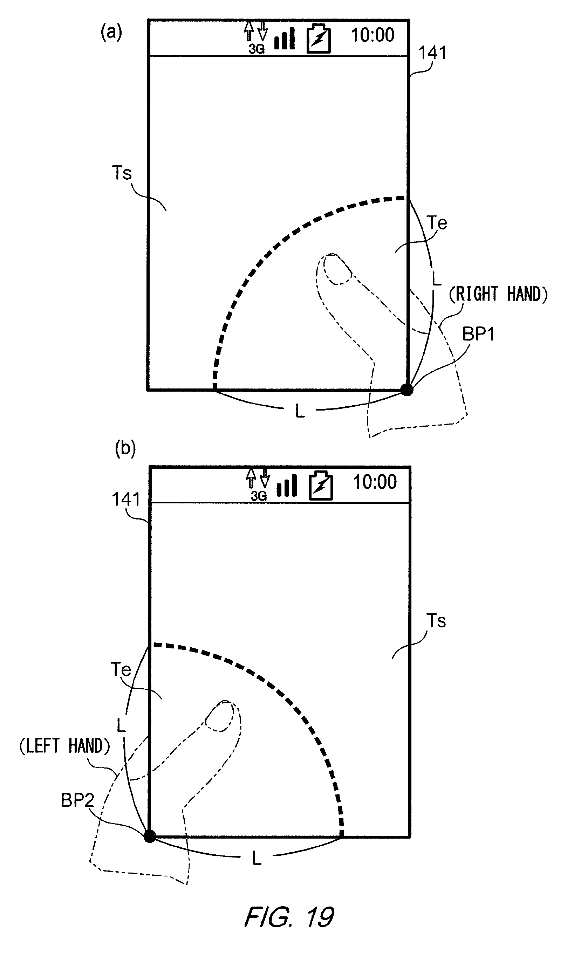

Fig. 19 is a diagram explaining a way used in display device 10 to automatically determine a hand of a user used to hold display device 10. It is to be noted that elements to which reference signs "BP1," "BP2," "Ts," "Te" are added in Fig. 19, are related to modification 4, and are not related to modification 3.

As shown in Fig. 19(a), it is assumed that display device 10 is held with a user's right hand. In this case, display device 10 continuously detects proximity operations performed with the base of a user's right thumb, at around the bottom right corner of display surface 141. Accordingly, for example, when proximity operations are continuously detected for at least a predetermined period in a predetermined range including the right end and the bottom of display surface 141, display device 10 determines that a hand of a user used to hold display device 10 is a right hand. As shown in Fig. 19(b), it is assumed that display device 10 is held with a user's left hand. In this case, display device 10 continuously detects proximity operations performed with the base of a user's left thumb, at around the bottom left corner of display surface 141. Accordingly, for example, when proximity operations are continuously detected for at least a predetermined period in a predetermined range including the left end and the bottom of display surface 141, display device 10 determines that a hand of a user used to hold display device 10 is a left hand.

Since proximity sensor 121 is able to detect positions above which proximity operations are performed by a user as a plane, it is also possible to automatically determine a hand of a user used to hold display device 10 based on the detection of proximity operations in display device 10.

A configuration in a case where the configuration for automatically determining a hand of a user used to hold display device 10 is applied to display device 10 of the above first embodiment will be described below.

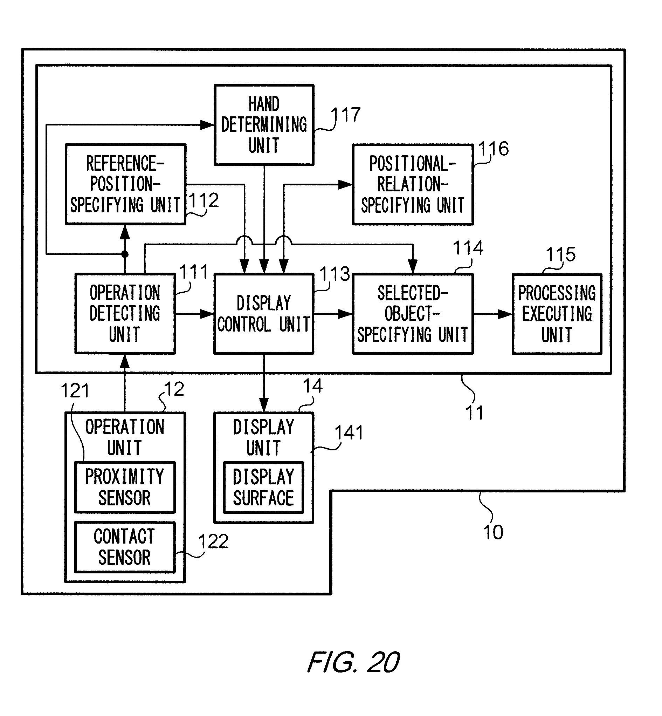

Fig. 20 is a function block diagram showing a functional configuration of control unit 11 of display device 10. As shown in Fig. 20, control unit 11 of display device 10 implements functions corresponding to operation detecting unit 111, reference-position-specifying unit 112, display control unit 113, selected-object-specifying unit 114, processing executing unit 115, positional-relation-specifying unit 116, and hand determining unit 117. Of these functions, operation detecting unit 111, reference-position-specifying unit 112, selected-object-specifying unit 114, processing executing unit 115, and positional-relation-specifying unit 116 implement the same functions as those of the above first embodiment, and therefore, a description is omitted herein.

Hand determining unit 117 (a determining unit) determines a hand of a user used to hold display device 10, for example, according to an algorithm described with reference to Fig. 19 based on proximity operations detected by operation detecting unit 111.

Display control unit 113 displays an object located at a position according to the hand determined by hand determining unit 117 in a display manner for supporting the indication by a contact operation of a user.

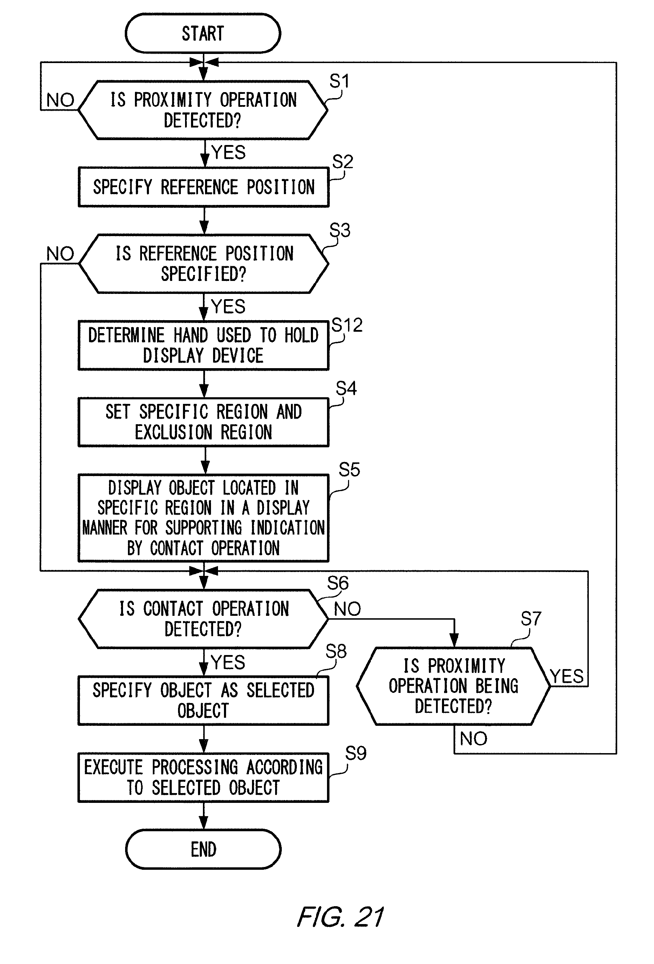

Fig. 21 is a flowchart showing a procedure for a processing performed when display device 10 provides a user interface. Regarding each of the processing steps of the present embodiment, a processing step, for which the same reference sign is used as that in the above first embodiment, is a step in which the same processing is performed as that in the first embodiment, and therefore, a description is omitted herein. Display device 10 repeatedly executes the following processing steps while an image including objects selectable by a user is displayed on display surface 141.

When a reference position is specified in the processing of step S2, and it is determined as "YES" in the processing of step S3, control unit 11 determines a hand of a user used to hold display device 10 (step S12). Control unit 11 then sets both specific region Ts and exclusion region Te in the same manner as that of the above first embodiment based on a reference position specified in the processing of step S2 and the hand determined in the processing of step S12 (step S4). Hereafter, control unit 11 executes the processing steps on and after step S5 in the same procedure as that of the above first embodiment.

According to display device 10 of this modification, a user does not have to manually set to display device 10 a hand of the user used to hold display device 10. A configuration for automatically determining a hand of a user used to hold display device 10 may be applied to display device 10 of the above second and third embodiments.

It is to be noted that the above algorithm for automatically determining a hand of a user used to hold display device 10 is merely an example. Other algorithms may be employed for determining a hand of a user used to hold display device 10.

### Modification 4

In the configuration of above modification 3, display device 10 may detect, by proximity operations, a position corresponding to the base of a finger of a user, not a position corresponding to a tip of a finger of a user, and may specify the detected position as a reference position. It is assumed that length L of a finger of a user is registered in advance in display device 10, and a value of L is stored in storage unit 15.

In this modification, display device 10 specifies reference position BP1 or BP2 that is a position of the base of a finger of a user as shown in Fig. 19(a) or 19(b). In this case, for ease of explanation, it is assumed that the bottom right corner or the bottom left corner of display surface 141 is specified as a reference position. However, display device 10 may specify a reference position that represents a position around the base of a finger of a user other than these positions.

For example, display device 10 sets to exclusion region Te a region having a length smaller than or equal to length L of the finger of the user from reference position BP1 or BP2. Display device 10 also sets to specific region Ts a region other than exclusion region Te (namely, a region further away from reference position BP1 or BP2 by a length greater than length L).

According to this modification, it is possible that display device 10 accurately specifies an object that is located at a position where it will be difficult for a finger of a user to reach the object based on a way the display device 10 is held by the user or a length of a finger of the user to support a contact operation of the user to indicate the object.

### Modification 5

In each of the above embodiments, display device 10 may bring close to a reference position a display area of only an object that has a size smaller than or equal to a threshold. This is because if an object is large, an operation error is not likely to occur even if the object is located at a position whether it is difficult for a user to operate the object.

It is to be noted that the size of an object is not specified based on an area, but may be specified in other manners. For example, if the object is square shaped or rectangle shaped, display device 10 may specify the size of the object using a length in a predetermined direction such as a length of a side (for example, the maximum length), or a length of a diagonal. If the object is circular shaped, display device 10 may specify the size of the object using a length in a radial direction (for example, the maximum length). Even if the object is formed of other shapes, display device 10 may specify the size using a length in any direction, instead of the area. Alternatively, display device 10 may specify the size of the object using the area and the length.

### Modification 6

In each of the above second and third embodiments, display device 10 may include a condition in which a number of another object included in the reference range is greater than or equal to a threshold (for example, greater than or equal to 3), in a specific condition. Since an operation error of a user is likely to occur as a number of a proximity object increases, if a number of another object is small and an operation error is not likely to occur, display device 10 does not have to change a display manner of objects. In this way, display device 10 determines the necessity of a support display based on the density of another object disposed surrounding an object located in a specific region.

### Modification 7

In each of the above embodiments, display device 10 specifies, as a selected object, an object indicated by a contact operation. However, display device 10 may specify, as a selected object, an object indicated by a non-contact operation (the second operation) in which a pointer such as a finger is brought much closer to the object than in a proximity operation that is performed for enlarging and displaying an object, instead of by the contact operation. In this case, for example, display device 10 may specify a selected object based on an operation that is performed in a first distance from display surface 141 in the normal direction within the detectable region of proximity sensor 121. In this case, a display device of the present invention does not have to include a contact sensor for detecting a state in which the pointer makes contact with display surface 141.

An image (screen) that includes an object and is displayed on display surface 141 of display unit 14 may be any kind of a screen. For example, the image may be a screen on which a variety of web pages is displayed or a screen, such as a desktop screen (home screen), on which a list of icon images representing applications to be run is displayed.

### Modification 8

In each of the above embodiments, although display device 10 includes a sensor for detecting a contact operation and a sensor for detecting a proximity operation separately, display device 10 may be configured such that a single sensor detects both the contact operation and the proximity operation.

A user interface device of the present invention needs only to perform at least a processing from a step of displaying objects to a step of specifying a selected object. The user interface device may be a device separated from a processing device for performing the processing according to the selected object.

### Modification 9

In each of the above embodiments, each of the functions implemented by control unit 11 of display device 10 may be implemented by a combination of a plurality of programs, or may be implemented by a cooperation of a plurality of hardware resources.

A user interface device of the present invention may be understood as a program executed by a computer or control unit 11 (or a recording medium for storing the program), or a user interface method.

### Reference Signs List

- 10: Display device
- 11: Control unit
- 111: Operation detecting unit
- 112: Reference-position-specifying unit
- 113: Display control unit
- 114: Selected-object-specifying unit
- 115: Processing executing unit
- 116: Positional-relation-specifying unit
- 117: Hand determining unit
- 12: Operation unit
- 121: Proximity sensor
- 122: Contact sensor
- 13: Communication unit
- 14: Display unit
- 141: Display surface
- 15: Storage unit

## Claims

1. A user interface device comprising:
a display unit that displays an image on a display surface;
an operation detecting unit that detects a first operation in which a pointer is brought close to the display surface without making contact with the display surface, and a second operation in which the pointer is brought closer to the display surface than in the first operation;
a reference-position-specifying unit that specifies a reference position of the pointer based on the first operation detected by the operation detecting unit;
a display control unit that controls a display of an image including a selectable object on the display surface, and upon a specification of the reference position by the reference-position-specifying unit, controls a display of an object according to the specified reference position in a predetermined display manner for supporting an indication by the second operation; and
a selected-object-specifying unit that specifies, upon a detection by the operation detecting unit of a second operation indicating an object displayed on the display surface, the object as a selected object by a user.

2. The user interface device according to Claim 1, wherein the display control unit controls a display of an object located in a specific region further away from the reference position by at least a predetermined distance in the predetermined display manner.

3. The user interface device according to Claim 1, wherein the reference-position-specifying unit specifies, upon a position indicated by the first operation being continually included in a predetermined range for a predetermined period, a reference position located in the predetermined range.

4. The user interface device according to Claim 1, wherein the pointer is a finger of a user;
the user interface device further comprising a determining unit that determines a hand of the user used to hold the user interface device based on the first operation detected by the operation detecting unit, and wherein
the display control unit controls a display of an object located at a position according to the hand determined by the determining unit and a length of the finger of the user, in the predetermined display manner.

5. The user interface device according to Claim 1, further comprising a positional-relation-specifying unit that specifies a positional relation between an object according to the reference position and another object displayed on the display surface, and wherein
the display control unit controls a display of the object according to the reference position in the predetermined display manner upon the positional relation specified by the positional-relation-specifying unit satisfying a specific condition.

6. The user interface device according to Claim 5, wherein the display control unit uses, as the specific condition, a condition in which the other object is disposed in a predetermined range from a position of the object according to the reference position.

7. The user interface device according to Claim 1, wherein the display control unit uses an enlarged display of the object as the predetermined display manner.

8. The user interface device according to Claim 1, wherein the display control unit uses a change of a display position of the object as the predetermined display manner.

9. A user interface method comprising:
an operation detecting step of detecting a first operation in which a pointer is brought close to a display surface, on which an image is displayed, without making contact with the display surface, and a second operation in which the pointer is brought closer to the display surface than in the first operation;
a reference-position-specifying step of specifying a reference position of the pointer based on the first operation detected in the operation detecting step;
a display control step of controlling a display of an image including a selectable object on the display surface, and upon a specification of the reference position in the reference-position-specifying step, controls a display of an object according to the specified reference position in a predetermined display manner for supporting an indication by the second operation; and
a selected-object-specifying step of specifying, upon a detection in the operation detecting step of a second operation indicating an object displayed on the display surface, the object as a selected object by a user.

10. A program for causing a computer of a display device that displays an image on a display surface, to execute:
an operation detecting step of detecting a first operation in which a pointer is brought close to the display surface without making contact with the display surface, and a second operation in which the pointer is brought closer to the display surface than in the first operation;
a reference-position-specifying step of specifying a reference position of the pointer based on the first operation detected in the operation detecting step;
a display control step of controlling a display of an image including a selectable object on the display surface, and upon a specification of the reference position in the reference-position-specifying step, controls a display of an object according to the specified reference position in a predetermined display manner for supporting an indication by the second operation; and
a selected-object-specifying step of specifying, upon a detection in the operation detecting step of a second operation indicating an object displayed on the display surface, the object as a selected object by a user.
